# EUROPÄISCHE PATENTSCHRIFT

(11) **EP 4 194 293 B1**
(45) Veröffentlichungstag und Bekanntmachung des Hinweises auf die Patenterteilung: **04.09.2024**
(21) Anmeldenummer: 22207186.2
(22) Anmeldetag: 14.11.2022
(51) Int. Cl.: B60T 17/08

(54) **BREMSSYSTEM, VERFAHREN ZUM BETREIBEN EINES BREMSSYSTEMS UND KRAFTFAHRZEUG MIT EINEM BREMSSYSTEM**
BRAKE SYSTEM, METHOD FOR OPERATING A BRAKE SYSTEM, AND MOTOR VEHICLE HAVING A BRAKE SYSTEM
SYSTÈME DE FREINAGE, PROCÉDÉ POUR FAIRE FONCTIONNER UN SYSTÈME DE FREINAGE ET VÉHICULE AUTOMOBILE ÉQUIPÉ D'UN SYSTÈME DE FREINAGE

(30) Priorität: 13.12.2021 DE 102021214270
(43) Veröffentlichungstag der Anmeldung: 14.06.2023
(73) Patentinhaber: VOLKSWAGEN AG, 38440 Wolfsburg (DE)
(72) Erfinder: Bärecke, Frank, 38444 Wolfsburg (DE); Alstadt, Christian, 38106 Braunschweig (DE); Schlimme, Hauke Christian, 38100 Braunschweig (DE); Bartels, Arne, 38448 Wolfsburg (DE)

(56) Entgegenhaltungen:
- DE-A1- 102015 201 236
- DE-A1- 102018 217 615
- DE-A1- 102019 206 501
- US-A1- 2005 029 864
- US-A1- 2010 025 141

## Beschreibung

Die vorliegende Erfindung betrifft ein Bremssystem - insbesondere ein sogenanntes *"Brake-By-Wire"* Bremssystem - für ein Kraftfahrzeug, aufweisend eine Bremsvorrichtung zum Bremsen eines Rads des Kraftfahrzeugs, eine Aktuatorvorrichtung zum gezielten Betätigen der Bremsvorrichtung, eine Steuerungsvorrichtung zum Steuern der Aktuatorvorrichtung und eine Notbremsvorrichtung zum Bremsen des Rads bei einer Betriebsstörung des Kraftfahrzeugs. Ferner betrifft die Erfindung ein Verfahren zum Betreiben eines erfindungsgemäßen Bremssystems sowie ein Kraftfahrzeug mit einem erfindungsgemäßen Bremssystem.

Herkömmliche Kraftfahrzeuge weisen grundsätzlich zwei Arten von Bremssystemen auf. Es gibt für die Fahrt ausgebildete Bremssysteme zum Abbremsen des rollenden Kraftfahrzeugs oder zum kurzzeitigen Halten, beispielsweise an einer Ampel. Derartige Bremssysteme werden im Folgenden der Einfachheit halber als Bremssysteme bezeichnet. Ferner existieren Feststellbremssysteme zum Halten des stehenden Kraftfahrzeugs in einer Parkposition. Zum Abbremsen eines rollenden Kraftfahrzeugs sind Feststellbremssysteme grundsätzlich nicht besonders geeignet. Diese Bremssysteme werden im Folgenden stets als Feststellbremssysteme bezeichnet.

Bei konventionellen Bremssystemen ist eine Übertragung einer Bremsvorgabe, wie beispielsweise über ein Bremspedal, mechanisch, insbesondere hydraulisch, auf eine Bremsvorrichtung, wie beispielsweise eine Scheibenbremse mit einer Bremsscheibe, einem Bremssattel und Bremsbelägen, zum Bremsen eines Rads des Kraftfahrzeugs übertragbar. Bei einem Ausfall eines Bordstromnetzes des Kraftfahrzeugs ist ein Abbremsen des Rads durch Betätigung der Bremsvorrichtung weiterhin, zumindest mit reduzierter Bremswirkung, möglich.

Moderne Brake-By-Wire Bremssysteme weisen eine Bremsvorrichtung auf, welche mittels einer elektrisch betreibbaren Aktuatorvorrichtung betätigbar ist. Eine Bremsvorgabe ist über eine Steuerungsvorrichtung des Bremssystems elektrisch an die Aktuatorvorrichtung übermittelbar. Die hierfür erforderliche elektrische Energie ist über das Bordstromnetz des Kraftfahrzeugs bereitstellbar. Nachteilig bei diesen Bremssystemen ist, dass bei einem Ausfall des Bordstromnetzes ein aktives Abbremsen des Kraftfahrzeugs mittels der Bremsvorrichtung nicht mehr möglich ist. Ein solches Szenario stellt eine besondere Gefahr für die Insassen des Kraftfahrzeugs sowie andere Verkehrsteilnehmer und Einrichtungen im Umfeld des Kraftfahrzeugs dar.

Ferner ist eine Vielzahl von Feststellbremssystemen für Kraftfahrzeuge bekannt. Das Dokument US 10,207,694 B2 offenbart ein pneumatisch betätigbares Feststellbremssystem. Mittels eines elektrischen Signals ist ein Aktuator dazu veranlassbar, eine Feststellbremse mittels Druckluft zu betätigen. Bei einem Ausfall des Bordstromnetzes ist das elektrische Signal zum Aktivieren der Feststellbremse nicht mehr übermittelbar. Das Dokument WO 2019 / 158 351 A1 zeigt eine elektropneumatische Feststellbremse, welche eine redundante Stromversorgung aufweist, sodass bei Ausfall einer Stromquelle noch eine weitere Stromquelle zum Betreiben der Feststellbremse zur Verfügung steht. Bei einem Totalausfall des Bordstromnetzes ist die Feststellbremse nicht aktivierbar. Aus dem Dokument US 2020 / 0 189 550 A1 ist ein elektropneumatisches Feststellbremssystem bekannt, welches zum Betätigen der Feststellbremse eine Federvorrichtung und zum Lösen der Feststellbremse ein Druckluftsystem aufweist, welches über eine Steuerungsvorrichtung betätigbar ist. Im Falle des Versagens eines Hauptbremssystems ist das Feststellbremssystem als Notbremssystem einsetzbar. Hierfür ist ein funktionierendes Bordstromnetz erforderlich.

Aus den Dokumenten DE 10 2018 217 615 A1, DE 10 2017 222 625 A1, DE 10 2019 206 501 A1, DE 10 2015 201 236 A1 und DE 10 2018 222 149 A1 sind verschiedene Bremssysteme mit mechanischen Notbremsvorrichtungen bekannt.

Bekannte Brake-by-Wire Bremssysteme und Feststellbremssysteme haben den Nachteil, dass zum Aktivieren stets auf das Bordstromnetz des Kraftfahrzeugs zurückgegriffen werden muss, da für die Übermittlung des Steuerbefehls elektrische Energie erforderlich ist. Bei einem Ausfall des Bordstromnetzes ist somit ein Feststellen der Räder des Kraftfahrzeugs nicht durchführbar. Selbst wenn eine Aktivierung möglich wäre, so ist ein bereitstellbares Bremsmoment bei einer Notbremsung nicht gezielt bereitstellbar, sodass die Gefahr eines zu starken Bremsens und ein damit verbundener Kontrollverlust über die Lenkung des Kraftfahrzeugs wesentlich erhöht ist.

Es ist daher Aufgabe der vorliegenden Erfindung, die voranstehend beschriebenen Nachteile bei einem Bremssystem für ein Kraftfahrzeug zu beheben oder zumindest teilweise zu beheben. Insbesondere ist es Aufgabe der vorliegenden Erfindung ein Bremssystem für ein Kraftfahrzeug, ein Verfahren zum Betreiben eines Bremssystems sowie ein Kraftfahrzeug zu schaffen, die auf eine einfache und kostengünstige Art und Weise ein sicheres Abbremsen des rollenden Kraftfahrzeugs bei einem Ausfall des Bordstromnetzes gewährleisten.

Voranstehende Aufgabe wird durch die Patentansprüche gelöst. Demnach wird die Aufgabe durch ein Bremssystem für ein Kraftfahrzeug mit den Merkmalen des unabhängigen Anspruchs 1, ein Verfahren zum Betreiben eines Bremssystems mit den Merkmalen des nebengeordneten Anspruchs 9 sowie durch ein Kraftfahrzeug mit den Merkmalen des nebengeordneten Anspruchs 10 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Bremssystem beschrieben sind, selbstverständlich auch im Zusammenhang mit dem erfindungsgemäßen Verfahren sowie dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch ein Bremssystem für ein Kraftfahrzeug gelöst. Das Bremssystem weist eine Bremsvorrichtung zum Bremsen eines Rads des Kraftfahrzeugs, eine Aktuatorvorrichtung zum gezielten Betätigen der Bremsvorrichtung, eine Steuerungsvorrichtung zum Steuern der Aktuatorvorrichtung und eine Notbremsvorrichtung zum Bremsen des Rads bei einer Betriebsstörung des Kraftfahrzeugs auf. Erfindungsgemäß weist die Notbremsvorrichtung einen elektrischen Energiespeicher zum Speichern von Energie zum Betätigen der Bremsvorrichtung und eine Auslösevorrichtung zum Freigeben der im Energiespeicher gespeicherten Energie zum Betätigen der Bremsvorrichtung auf, wobei die Auslösevorrichtung ausgebildet ist, den Energiespeicher bei einem Ausfall eines Bordstromnetzes des Kraftfahrzeugs freizugeben.

Die Bremsvorrichtung ist zum Bremsen des Rads des Kraftfahrzeugs ausgebildet. Vorzugsweise weist das Bremssystem mehrere gattungsgemäße Bremsvorrichtungen auf. Vorzugsweise weist das Bremssystem vier Bremsvorrichtungen auf, welche jeweils zum Bremsen eines anderen Rads ausgebildet sind. Die Bremsvorrichtung ist vorzugsweise als Scheibenbremse ausgebildet und weist eine mit dem Rad drehfest koppelbare Bremsscheibe sowie an einer Karosserie des Kraftfahrzeugs anordenbare Bremssattel mit daran relativ zueinander bewegbar gehaltenen Bremsbelaghaltern auf, an welchen Bremsbeläge angeordnet sind. Alternativ kann die Bremsvorrichtung auch als Trommelbremse mit verschwenkbaren Bremsbacken, an denen vorzugsweise die Bremsbeläge angeordnet sind, oder dergleichen ausgebildet sein.

Zum Bereitstellen einer Bremsvorgabe weist das Bremssystem vorzugsweise eine Bremsvorgabevorrichtung auf, die beispielsweise ein Bremspedal aufweisen kann. Eine Bremsvorgabe ist somit durch gezieltes Betätigen des Bremspedals durch den Fahrer des Kraftfahrzeugs an das Bremssystem übermittelbar. Es kann auch ein Bremspedal für einen Beifahrer des Kraftfahrzeugs vorgesehen sein. Zusätzlich oder alternativ ist die Bremsvorgabevorrichtung beispielsweise als Schnittstelle eines Fahrerassistenzsystems, wie beispielsweise eines Bremsassistenten oder einer autonomen Fahrzeugsteuerung, ausgebildet, um die Bremsvorgabe des Fahrerassistenzsystems aufzunehmen.

Zum gezielten Betätigen der Bremsvorrichtung weist das Bremssystem die Aktuatorvorrichtung auf. Die Aktuatorvorrichtung kann erfindungsgemäß beispielsweise als elektropneumatische, elektrohydraulische oder elektromechanische Aktuatorvorrichtung ausgebildet sein. Mittels der Aktuatorvorrichtung ist ein Bremsdruck in der Bremsvorrichtung zum Bremsen des Rads erzeugbar. Demnach ist die Aktuatorvorrichtung vorzugsweise zum relativen Bewegen der Bremsbelaghalter bzw. der Bremsbacken ausgebildet. Eine Höhe des Bremsdrucks und somit des erzeugbaren Bremsmoments ist über die Aktuatorvorrichtung gezielt einstellbar.

Die Steuerungsvorrichtung ist zum gezielten Steuern der Aktuatorvorrichtung ausgebildet. Mittels der Steuerungsvorrichtung ist beispielsweise eine gezielte Bestromung der Aktuatorvorrichtung zum Erzeugen eines pneumatischen Drucks, eines hydraulischen Drucks oder einer mechanischen Druckkraft, beispielsweise mittels eines Elektromotors, welcher vorzugsweise mit einem Getriebe, wie beispielsweise einem Zahnradgetriebe, Kugelspindeltrieb oder dergleichen, gekoppelt ist, zum relativen Bewegen der Bremsbeläge bewirkbar.

Die Notbremsvorrichtung ist zum Bremsen des Rads bei einer Betriebsstörung des Kraftfahrzeugs ausgebildet. Unter einer Betriebsstörung wird im Rahmen der Erfindung insbesondere ein Ausfall des gesamten Bordstromnetzes verstanden, sodass sämtliche elektronische Komponenten nicht mehr betreibbar sind. Zum Gewährleisten eines sicheren Abbremsens während einer solchen Betriebsstörung weist die Notbremsvorrichtung den Energiespeicher und die Auslösevorrichtung auf. Die Notbremsvorrichtung ist vorzugsweise zum nachhaltigen Bremsen des Rads ausgebildet. Das bedeutet, dass die Notbremsvorrichtung vorzugsweise ausgebildet ist, nach dem Anhalten des Kraftfahrzeugs im Zusammenspiel mit der Bremsvorrichtung die Funktion einer Feststellbremse zu realisieren.

Der Energiespeicher ist zum Zwischenspeichern von Energie zum Betätigen der Bremsvorrichtung ausgebildet. Eine Speicherkapazität des Energiespeichers ist vorzugsweise derart bemessen, dass die Energie ausreicht, um das mit Höchstgeschwindigkeit fahrende Kraftfahrzeug sicher zum Stillstand zu bringen. Das Bremssystem weist vorzugsweise eine Energieaustauschvorrichtung zum Hinzufügen von Energie in den Energiespeicher sowie zum Abführen von Energie aus dem Energiespeicher auf. Mittels der Energieaustauschvorrichtung ist somit ein vordefiniertes Energieniveau im Energiespeicher einstellbar. Der Energiespeicher ist erfindungsgemäß als elektrischer Energiespeicher ausgebildet. Als elektrischer Energiespeicher ist beispielsweise ein Kondensator bevorzugt. Der Energiespeicher ist vorzugsweise zum gezielten Abgeben der gespeicherten Energie ausgebildet. Unter einem gezielten Abgeben kann beispielsweise ein lineares, progressives, degressives oder intermittierendes Abgeben der Energie verstanden werden. Vorzugsweise ist der Energiespeicher hierfür konfigurierbar ausgebildet, sodass die Art des gezielten Abgebens der Energie beispielsweise während der Fahrt des Kraftfahrzeugs veränderbar ist. Bei einer schneebedeckten oder nassen Fahrbahn ist beispielsweise eine intermittierende Energieabgabe, bei einer dichten Verkehrslage zur Vermeidung eines Auffahrunfalls nachfolgender Kraftfahrzeuge eine progressive Energieabgabe oder kurz vor einer Kurve eine degressive Energieabgabe konfigurierbar.

Die Auslösevorrichtung ist zum Zurückhalten sowie zum Freigeben der im Energiespeicher gespeicherten Energie ausgebildet. Die gespeicherte Energie ist derart freigebbar, dass hierdurch direkt oder indirekt die Bremsvorrichtung betätigbar ist. Eine derartige Freigabe kann beispielsweise in Abhängigkeit der Bremsvorgabe und/oder einer aktuellen Verzögerung des Kraftfahrzeugs und/oder einer aktuellen Geschwindigkeit des Kraftfahrzeugs und/oder eines aktuellen Gefälles der Fahrbahn erfolgen. Die Auslösevorrichtung ist weiter ausgebildet, die im Energiespeicher gespeicherte Energie bei einem Ausfall des Bordstromnetzes zum Betätigen der Bremsvorrichtung automatisch freizugeben. Vorzugsweise ist die Auslösevorrichtung ausgebildet, die im Energiespeicher gespeicherte Energie bei einem Normalbetrieb des Bordstromnetzes, zumindest während der Fahrt des Kraftfahrzeugs, nicht zum Betätigen der Bremsvorrichtung freizugeben. Die Auslösevorrichtung kann beispielsweise einen elektrischen Stromspeicher und einen Elektromotor aufweisen, die derart konfiguriert sind, dass der Stromspeicher bei funktionierendem Bordstromnetz aufgeladen ist oder über das Bordstromnetz aufladbar ist. Der Elektromotor ist vorzugsweise als Stellmotor mit einer hohen Selbsthemmung ausgebildet, sodass kein versehentliches Auslösen aufgrund von Vibrationen oder dergleichen erfolgen kann. Der Elektromotor ist in diesem Zustand vorzugsweise unbestromt. Bei einem Wegfall des Bordstromnetzes ist der Stromspeicher ausgebildet, automatisch elektrische Energie an den Elektromotor abzugeben. Hierdurch ist die im Energiespeicher gespeicherte Energie zum Betätigen der Bremsvorrichtung freigebbar.

Ein erfindungsgemäßes Bremssystem hat gegenüber herkömmlichen Bremssystemen den Vorteil, dass mit einfachen Mitteln sowie auf eine kostengünstige Art und Weise mittels der Notbremsvorrichtung ein zuverlässiges Anhalten des fahrenden Kraftfahrzeugs bei einem Ausfall des Bordstromnetzes sichergestellt ist. Dies wird durch das Zusammenspiel des Energiespeichers mit der Auslösevorrichtung erreicht. Die Auslösevorrichtung ist ausgebildet, bei Ausfall des Bordstromnetzes den Energiespeicher automatisch und ohne das Erfordernis der Versorgung mit elektrischer Energie vom Bordstromnetz freizugeben. Der Energiespeicher stellt der Bremsvorrichtung die zum Abbremsen des Kraftfahrzeugs erforderliche Energie bereit. Somit ist die Betriebssicherheit des erfindungsgemäßen Bremssystems gegenüber herkömmlichen Bremssystemen wesentlich erhöht.

Gemäß einer bevorzugten Weiterentwicklung der Erfindung kann bei einem Bremssystem vorgesehen sein, dass die Notbremsvorrichtung eine Konfigurationsvorrichtung zum gezielten Konfigurieren der durch die Notbremsvorrichtung bereitstellbaren Betätigung der Bremsvorrichtung aufweist, wobei die Konfigurationsvorrichtung zum Erhöhen sowie zum Absenken der im Energiespeicher gespeicherten Energie und/oder zum Einstellen der vom Energiespeicher maximal abgebbaren Energie und/oder zum Einstellen einer Abgabegeschwindigkeit der vom Energiespeicher abgebbaren Energie ausgebildet ist. Die Konfigurationsvorrichtung kann beispielsweise zum Erhöhen, insbesondere zum gezielten Erhöhen, sowie zum Absenken, insbesondere zum gezielten Absenken, der im Energiespeicher gespeicherten Energie ausgebildet sein. Alternativ oder zusätzlich kann die Konfigurationsvorrichtung erfindungsgemäß zum Einstellen bzw. Begrenzen der vom Energiespeicher maximal abgebbaren Energie und/oder einer Abgabegeschwindigkeit der vom Energiespeicher abgebbaren Energie ausgebildet sein. Die Konfigurationsvorrichtung ist vorzugsweise ausgebildet, die Notbremsvorrichtung während der Fahrt des Kraftfahrzeugs wiederholt, vorzugsweise mindestens einmal pro fünf Sekunden, besonders bevorzugt mindestens einmal pro Sekunde, oder kontinuierlich zu konfigurieren. Die Konfigurationsvorrichtung ist vorzugsweise ausgebildet, das Konfigurieren des Energiespeichers auf Basis vordefinierter Parameter durchzuführen, wobei diese Parameter vorzugsweise eine Relevanz, insbesondere eine besondere Relevanz, für einen Bremsvorgang des Kraftfahrzeugs aufweisen. Dies hat den Vorteil, dass mit einfachen Mitteln sowie auf eine kostengünstige Art und Weise sicherstellbar ist, dass mittels der Notbremsvorrichtung bei einem Ausfall des Bordstromnetzes ein aktuell bedarfsgerechtes Bremsmoment bewirkbar ist.

Es ist erfindungsgemäß bevorzugt, dass die Konfigurationsvorrichtung ausgebildet ist, das Konfigurieren der bereitstellbaren Betätigung in Abhängigkeit von Streckendaten und/oder Wetterdaten und/oder Verkehrsdaten und/oder der Fahrzeuggeschwindigkeit und/oder eines Fahrerprofils eines Fahrers des Kraftfahrzeugs und/oder eines Gesamtgewichts des Kraftfahrzeugs und/oder eines Reifenzustands des Kraftfahrzeugs durchzuführen. Als Streckendaten sind erfindungsgemäß beispielsweise Daten über Steigungen, Gefälle, Kurven, Querneigungen, Fahrbahnbreiten, Fahrbahnbeläge oder dergleichen berücksichtigbar. Die Streckendaten sind beispielsweise von einem Navigationssystem des Kraftfahrzeugs, externen Datenquellen sowie Sensoren des Kraftfahrzeugs, wie beispielsweise einem Neigungssensor, Radarsensor, Lidarsensor oder dergleichen, bereitstellbar. Als Wetterdaten sind erfindungsgemäß beispielsweise Daten über Umgebungstemperaturen, Niederschläge, Schneelage, Glatteis, Windstärke, Windrichtung oder dergleichen berücksichtigbar. Die Wetterdaten sind beispielsweise von externen Datenquellen sowie Sensoren des Kraftfahrzeugs, wie beispielsweise einem Temperatursensor, einem Radarsensor, einem Lidarsensor oder dergleichen, bereitstellbar. Als Verkehrsdaten sind erfindungsgemäß beispielsweise Daten über Verkehrsdichte, Verkehrsfluss, Unfälle oder dergleichen berücksichtigbar. Die Verkehrsdaten sind beispielsweise von externen Datenquellen sowie Sensoren des Kraftfahrzeugs, wie beispielsweise einem Radarsensor, einem Lidarsensor oder dergleichen, bereitstellbar. Das Fahrerprofil ist beispielsweise in einer Speichervorrichtung des Kraftfahrzeugs gespeichert. Vorzugsweise enthält das Fahrerprofil fahrerspezifische Daten, wie beispielsweise das Alter des Fahrers und/oder einen Fahrstil des Fahrers und/oder eine Fahrtüchtigkeit des Fahrers und/oder eine Fahrfähigkeit des Fahrers oder dergleichen. Diese Daten stehen allesamt mit dem Bremsverhalten des Kraftfahrzeugs in Verbindung. Auf diese Weise ist die Notbremsvorrichtung situativ konfigurierbar, sodass beispielsweise bei einem sportlichen Fahrer eine kräftigere Notbremsung durchführbar ist als bei einem eher zurückhaltenden bzw. ängstlichen Fahrer. Vor einer Kurve oder bei einem starken Gefälle ist somit beispielsweise eine kräftigere Notbremsung konfigurierbar als auf einer Geraden oder bei einer größeren Steigung. Bei einem geringeren Abstand zu einem vorfahrenden Kraftfahrzeug als zu einem nachfolgenden Kraftfahrzeug ist somit beispielsweise eine kräftigere Notbremsung konfigurierbar als bei einem geringeren Abstand zu einem nachfolgenden Kraftfahrzeug, um einen Auffahrunfall zu verhindern. Dies hat den Vorteil, dass mit einfachen Mitteln sowie auf eine kostengünstige Art und Weise die Betriebssicherheit des Bremssystems weiter verbessert ist.

Weiter bevorzugt weist die Konfigurationsvorrichtung zum Konfigurieren des Energiespeichers einen selbsthemmenden Spindeltrieb auf. Der selbsthemmende Spindeltrieb ist vorzugsweise als Kugelspindeltrieb ausgebildet. Vorzugsweise ist der selbsthemmende Spindeltrieb ausgebildet, eine Vorspannung des als Federvorrichtung ausgebildeten Energiespeichers zu verstellen sowie zu halten. Alternativ kann der selbsthemmende Spindeltrieb ausgebildet sein, ein Volumen eines als Druckvorrichtung ausgebildeten Energiespeichers zu verstellen sowie zu halten. Dies hat den Vorteil, dass mit einfachen Mitteln sowie auf eine kostengünstige Art und Weise eine leichte Konfigurierbarkeit des Energiespeichers gewährleistet ist.

In einer besonders bevorzugten Ausgestaltung der Erfindung ist der Energiespeicher zum direkten Betätigen der Bremsvorrichtung und/oder zum Betätigen der Aktuatorvorrichtung zum Betätigen der Bremsvorrichtung und/oder zum Betätigen einer Notaktuatorvorrichtung zum Betätigen der Bremsvorrichtung ausgebildet. Ein direktes Betätigen kann beispielsweise derart realisiert sein, dass der Energiespeicher ausgebildet ist, eine Druckkraft gegen die Bremsvorrichtung auszuüben mittels welcher ein Bremsmoment erzeugbar ist. Ein Betätigen der Aktuatorvorrichtung kann beispielsweise derart realisiert sein, dass der Energiespeicher ein Druckmedium, wie beispielsweise eine Hydraulikflüssigkeit, bereitstellt, die in die Aktuatorvorrichtung zum Betätigen der Bremsvorrichtung einleitbar ist. Eine Notaktuatorvorrichtung ist im Sinne der Erfindung eine zusätzliche Aktuatorvorrichtung, welche zum Betätigen der Bremsvorrichtung mittels des Energiespeichers betreibbar ist. Dies hat den Vorteil, dass mit einfachen Mitteln sowie auf eine kostengünstige Art und Weise die Betriebssicherheit des Bremssystems weiter verbessert ist.

Vorzugsweise weist die Auslösevorrichtung einen Elektromagneten zum Halten der Auslösevorrichtung in einer Grundstellung auf. Überdies weist die Auslösevorrichtung vorzugsweise eine Federvorrichtung auf, die in der Grundstellung eine Vorspannung aufweist. Bei einem Wegfall des Bordstromnetzes fällt auch die Bestromung des Elektromagneten weg, sodass die Auslösevorrichtung durch die Federkraft aus der Grundstellung bewegbar und der Notbremsvorgang somit einleitbar ist. Dies hat den Vorteil, dass mit einfachen Mitteln sowie auf eine kostengünstige Art und Weise die Betriebssicherheit des Bremssystems weiter verbessert ist.

Gemäß einer bevorzugten Ausführungsform der Erfindung weist die Auslösevorrichtung eine Spannungsüberwachungsvorrichtung zum Überwachen des Bordstromnetzes, einen elektrischen Stellmotor zum Freigeben des Energiespeichers zum Betätigen der Bremsvorrichtung und einen Stromspeicher zum Speichern eines Notbetriebsstroms zum Betreiben des Stellmotors auf, wobei die Auslösevorrichtung ausgebildet ist, bei einem Ausfall des Bordstromnetzes den Stellmotor mit dem Notbetriebsstrom zu betreiben. Die Auslösevorrichtung ist vorzugsweise derart ausgebildet, dass der Stellmotor bei einem funktionierenden Bordstromnetz unbestromt ist. Der Stellmotor weist vorzugsweise eine derartige Selbsthemmung auf, dass dieser im unbestromten Zustand seine aktuelle Stellung beibehält. Ein Ausfall des Bordstromnetzes ist von der Spannungsüberwachungsvorrichtung detektierbar. Die Spannungsüberwachungsvorrichtung ist ausgebildet, in diesem Fall den Stromschalter zum Betreiben des Stellmotors freizuschalten. Mittels des Stellmotors ist die im Energiespeicher gespeicherte Energie, wie beispielsweise Federenergie oder hydrostatische Energie, zum Betreiben der Bremsvorrichtung freigebbar. Dies hat den Vorteil, dass mit einfachen Mitteln sowie auf eine kostengünstige Art und Weise die Betriebssicherheit des Bremssystems weiter verbessert ist.

Besonders bevorzugt weist die Notbremsvorrichtung eine Rückstellvorrichtung zum Zurückstellen der Auslösevorrichtung in eine Grundstellung auf. Mittels der Rückstellvorrichtung ist die Auslösevorrichtung nach einem Notbremsvorgang und wenn das Bordstromnetz wieder verfügbar ist in die Grundstellung zurückstellbar. Die Rückstellvorrichtung ist vorzugsweise als Teil der Auslösevorrichtung ausgebildet. In der Grundstellung ist eine Abgabe der im Energiespeicher gespeicherten Energie zum Betätigen der Bremsvorrichtung durch die Auslösevorrichtung vorzugsweise unterbunden. Ferner ist das Bremssystem vorzugsweise ausgebildet, den Energiespeicher wieder aufzufüllen, sodass mittels der Notbremsvorrichtung bei einem erneuten Ausfall des Bordstromnetzes ein weiterer Notbremsvorgang durchführbar ist. Hierfür ist vorzugsweise die Konfigurationsvorrichtung ausgebildet. Alternativ oder zusätzlich kann auch die Auslösevorrichtung hierfür ausgebildet sein. Dies hat den Vorteil, dass mit einfachen Mitteln sowie auf eine kostengünstige Art und Weise die Betriebssicherheit des Bremssystems weiter verbessert ist.

Gemäß einem zweiten Aspekt der Erfindung wird die Aufgabe durch ein Verfahren zum Betreiben eines erfindungsgemäßen Bremssystems gelöst. Das Verfahren weist auf:
- Halten der Auslösevorrichtung in der Grundstellung, wenn ein Bordstromnetz zum Betätigen der Aktuatorvorrichtung ausreichend elektrischen Strom bereitstellt,
- Ermitteln von Fahrzeugparametern und Umweltparametern, die einen Einfluss auf eine Bremsvorgabe zum Sicheren Bremsen des Kraftfahrzeugs haben, mittels einer Ermittlungsvorrichtung des Kraftfahrzeugs,
- Konfigurieren der durch die Notbremsvorrichtung bereitstellbaren Betätigung der Bremsvorrichtung mittels der Konfigurationsvorrichtung,
- Freigeben der im elektrischen Energiespeicher gespeicherten Energie mittels der Auslösevorrichtung, wenn das Bordstromnetz zum Betätigen der Aktuatorvorrichtung nicht mehr ausreichend elektrischen Strom bereitstellt und
- Betätigen der Bremsvorrichtung mittels der vom elektrischen Energiespeicher freigegebenen Energie.

Zunächst befindet sich das Bremssystem in einem Normalzustand. Das Bordstromnetz funktioniert, sodass ausreichend elektrische Energie zum Betreiben der Steuerungsvorrichtung sowie der Aktuatorvorrichtung bereitgestellt ist. Eine Bremsvorgabe ist in diesem Zustand durch die Bremsvorrichtung problemlos realisierbar. Mittels der Ermittlungsvorrichtung werden für die Notbremsvorrichtung bremsrelevante Parameter ermittelt. Auf Basis dieser ermittelten Parameter wird die Notbremsvorrichtung konfiguriert. Diese Konfiguration kann beispielsweise eine Beladung des Energiespeichers und/oder eine Energieabgaberate des Energiespeichers im Notbremsfall betreffen. Diese Konfiguration erfolgt vorzugsweise derart, dass mittels der Notbremsvorrichtung zu jedem Zeitpunkt während der Fahrt des Kraftfahrzeugs eine sichere Notbremsung durchführbar ist. Bei einem Ausfall des Bordstromnetzes, wenn ein Normalbetrieb des Bremssystems nicht mehr gewährleistet ist, leitet die Auslösevorrichtung automatisch den Notbremsvorgang durch Freigeben der im elektrischen Energiespeicher gespeicherten Energie an die Bremsvorrichtung an. Hierdurch wird das Rad abgebremst.

Bei dem erfindungsgemäßen Verfahren ergeben sich sämtliche Vorteile, die bereits zu einem Bremssystem gemäß dem ersten Aspekt der Erfindung beschrieben worden sind. Demnach hat das erfindungsgemäße Verfahren gegenüber herkömmlichen Verfahren den Vorteil, dass mit einfachen Mitteln sowie auf eine kostengünstige Art und Weise mittels der Notbremsvorrichtung ein zuverlässiges Anhalten des fahrenden Kraftfahrzeugs bei einem Ausfall des Bordstromnetzes sichergestellt ist. Dies wird durch das Zusammenspiel des Energiespeichers mit der Auslösevorrichtung erreicht. Die Auslösevorrichtung gibt bei Ausfall des Bordstromnetzes den Energiespeicher automatisch und ohne das Erfordernis der Versorgung mit elektrischer Energie vom Bordstromnetz frei. Der Energiespeicher stellt der Bremsvorrichtung die zum Abbremsen des Kraftfahrzeugs erforderliche Energie bereit. Somit ist ein sicherer Notbremsvorgang durchführbar.

Gemäß einem dritten Aspekt der Erfindung wird die Aufgabe durch ein Kraftfahrzeug gelöst. Das Kraftfahrzeug weist ein Antriebssystem zum Antreiben des Kraftfahrzeugs und ein Bremssystem zum Bremsen des Kraftfahrzeugs auf. Erfindungsgemäß ist das Bremssystem als erfindungsgemäßes Bremssystem ausgebildet. Das Kraftfahrzeug weist vorzugsweise mehrere Sensoren auf, die zum Erfassen bremsrelevanter Daten für das Bremssystem ausgebildet sind.

Bei dem erfindungsgemäßen Kraftfahrzeug ergeben sich sämtliche Vorteile, die bereits zu einem Bremssystem gemäß dem ersten Aspekt der Erfindung sowie zu einem Verfahren gemäß dem zweiten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise mittels der Notbremsvorrichtung ein zuverlässiges Anhalten des fahrenden Kraftfahrzeugs bei einem Ausfall des Bordstromnetzes sichergestellt ist. Dies wird durch das Zusammenspiel des Energiespeichers mit der Auslösevorrichtung erreicht. Die Auslösevorrichtung ist ausgebildet, bei Ausfall des Bordstromnetzes den Energiespeicher automatisch und ohne das Erfordernis der Versorgung mit elektrischer Energie vom Bordstromnetz freizugeben. Der Energiespeicher stellt der Bremsvorrichtung die zum Abbremsen des Kraftfahrzeugs erforderliche Energie bereit. Somit ist die Betriebssicherheit des erfindungsgemäßen Kraftfahrzeugs gegenüber herkömmlichen Kraftfahrzeugen wesentlich erhöht.

Ein erfindungsgemäßes Bremssystem, ein erfindungsgemäßes Verfahren sowie ein erfindungsgemäßes Kraftfahrzeug werden nachfolgend anhand von Zeichnungen näher erläutert. Es zeigen jeweils schematisch:
- Figur 1: in einer Prinzipskizze eine bevorzugte erste Ausführungsform eines erfindungsgemäßen Bremssystems,
- Figur 2: in einer Prinzipskizze eine bevorzugte zweite Ausführungsform eines erfindungsgemäßen Bremssystems,
- Figur 3: in einer Prinzipskizze eine bevorzugte dritte Ausführungsform eines erfindungsgemäßen Bremssystems,
- Figur 4: in einem Ablaufdiagramm eine bevorzugte Ausführungsform eines erfindungsgemäßen Verfahrens, und
- Figur 5: in einer Seitenansicht eine bevorzugte Ausführungsform eines erfindungsgemäßen Kraftfahrzeugs.

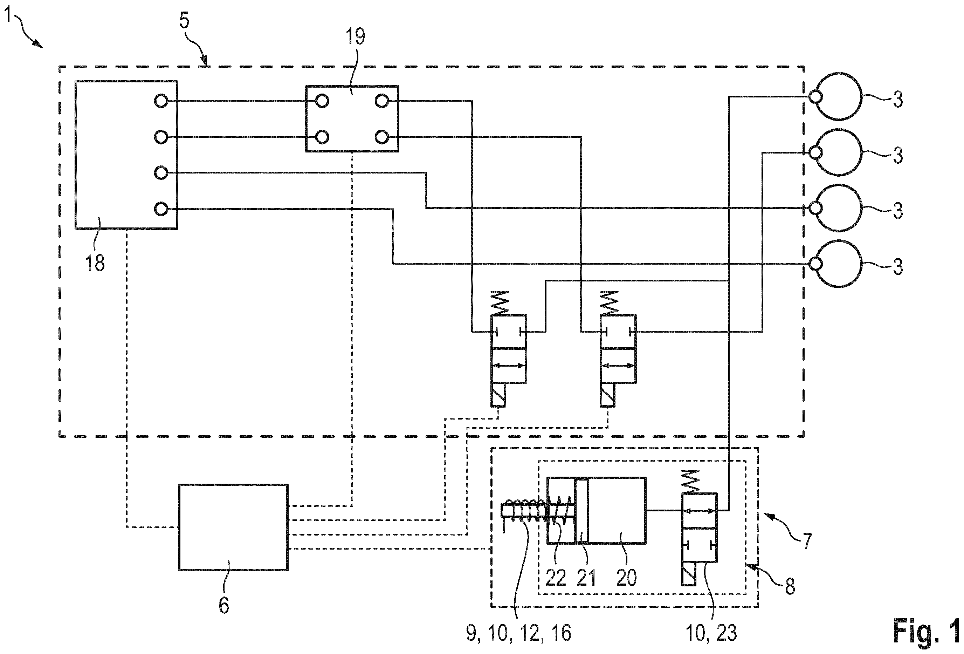

Elemente mit gleicher Funktion und Wirkungsweise sind in den Figuren 1 bis 5 jeweils mit denselben Bezugszeichen versehen.

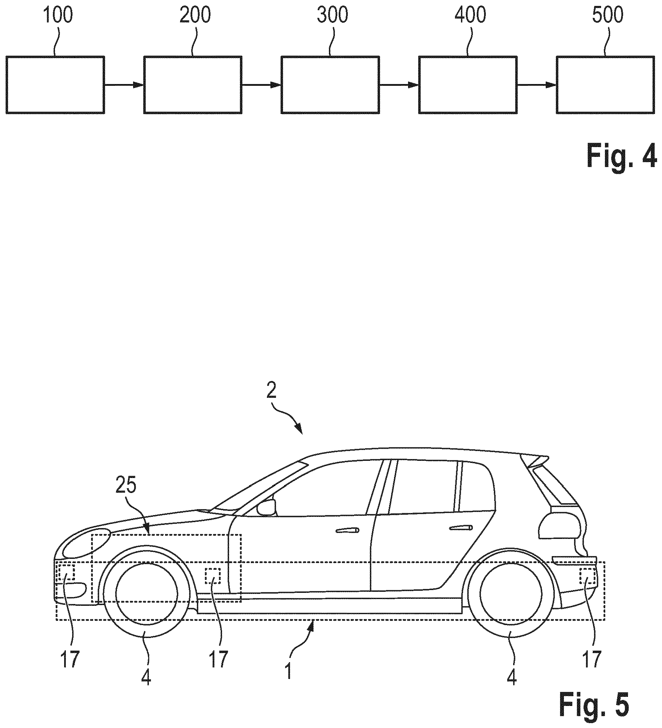

In Fig. 1 ist die bevorzugte erste Ausführungsform eines erfindungsgemäßen Bremssystems 1 für ein Kraftfahrzeug 2 (vgl. Fig. 5) in einer Prinzipskizze schematisch abgebildet. Das Bremssystem 1 weist zum Bremsen mehrerer in dieser Darstellung nicht abgebildeter Räder 4 (vgl. Fig. 5) jeweils eine Bremsvorrichtung 3 sowie eine hydraulische Aktuatorvorrichtung 5 zum Betätigen der Bremsvorrichtung 3 auf. Die Aktuatorvorrichtung 5 weist zum Erzeugen eines Betriebsdrucks zum Betreiben der Bremsvorrichtung 3 eine primäre Druckvorrichtung 18 und eine sekundäre Druckvorrichtung 19 auf. Zum Betreiben der Aktuatorvorrichtung 5 weist das Bremssystem 1 eine Steuerungsvorrichtung 6 auf.

Ferner weist das Bremssystem 1 zum Durchführen eines Notbremsvorgangs eine Notbremsvorrichtung 7 auf. Die Notbremsvorrichtung 7 weist einen Energiespeicher 8 und eine Auslösevorrichtung 9 zum Freigeben der im Energiespeicher 8 gespeicherten Energie zum Betreiben der Bremsvorrichtung 3 auf. Der Energiespeicher 8 weist einen Druckzylinder 20 auf, in welchem ein Druckkolben 21 verschiebbar gehalten ist. An dem Druckkolben 21 ist eine Druckfeder 22 angeordnet. Alternativ oder zusätzlich kann auch eine Zugfeder am Druckkolben 21 angeordnet sein, dessen Federkraft vorzugsweise in dieselbe Richtung wirkt wie die Federkraft der Druckfeder 22. Der Druckkolben 21 ist in einer Grundstellung dargestellt, in welcher die Druckfeder 22 eine Vorspannung aufweist. Der Druckkolben 21 ist von der Auslösevorrichtung 9 in der Grundstellung gehalten. Hierfür weist die Auslösevorrichtung 9 einen Elektromagneten 12 auf. Bei Wegfall einer Stromversorgung wird der Elektromagnet 12 inaktiv, sodass die Auslösevorrichtung 9 den Druckkolben 21 automatisch freigibt. Mittels der vorgespannten Druckfeder 22 ist der Druckkolben 21 aus der Grundstellung in den Druckzylinder 20 hineindrückbar. Auf diese Weise ist Hydraulikfluid aus dem Druckzylinder 20 zum Betätigen der Bremsvorrichtung 3 zur Aktuatorvorrichtung 5 herausdrückbar. Um ein Druckniveau bei Ausfall des Bordstromnetzes zu halten weist die Aktuatorvorrichtung 5 zwei Schutzventile 24 auf, welche im Normalbetrieb offen und im unbestromten Zustand, insbesondere bei Ausfall des Bordstromnetzes geschlossen sind. Ein Fluidstrom von der Notbremsvorrichtung 7 in Richtung der primären Druckvorrichtung 18 sowie der sekundären Druckvorrichtung 19 ist auf diese Weise verhinderbar.

Des Weiteren weist die Notbremsvorrichtung 7 eine Konfigurationsvorrichtung 10 auf, welche zu einem Teil durch die Auslösevorrichtung 9 und zu einem anderen Teil durch ein Notventil 23 realisiert ist. Mittels der Auslösevorrichtung 9 der Konfigurationsvorrichtung 10 ist eine Stellung des Druckkolbens 21 relativ zum Druckzylinder 20 gezielt veränderbar und somit die Vorspannung der Druckfeder 22 entsprechend vergrößerbar oder verkleinerbar. Das Notventil 23 der Konfigurationsvorrichtung ist zum gezielten, vorzugsweise stufenlosen, Begrenzen eines Hydraulikfluidstroms vom Energiespeicher 8 zur Aktuatorvorrichtung 5 ausgebildet. Das Notventil 23 ist vorzugsweise mittels der Steuerungsvorrichtung 6 verstellbar und weist vorzugsweise eine Selbsthemmung auf, sodass eine Ventilstellung des Notventils 23 bei inaktiver Ansteuerung des Notventils 23 erhalten bleibt.

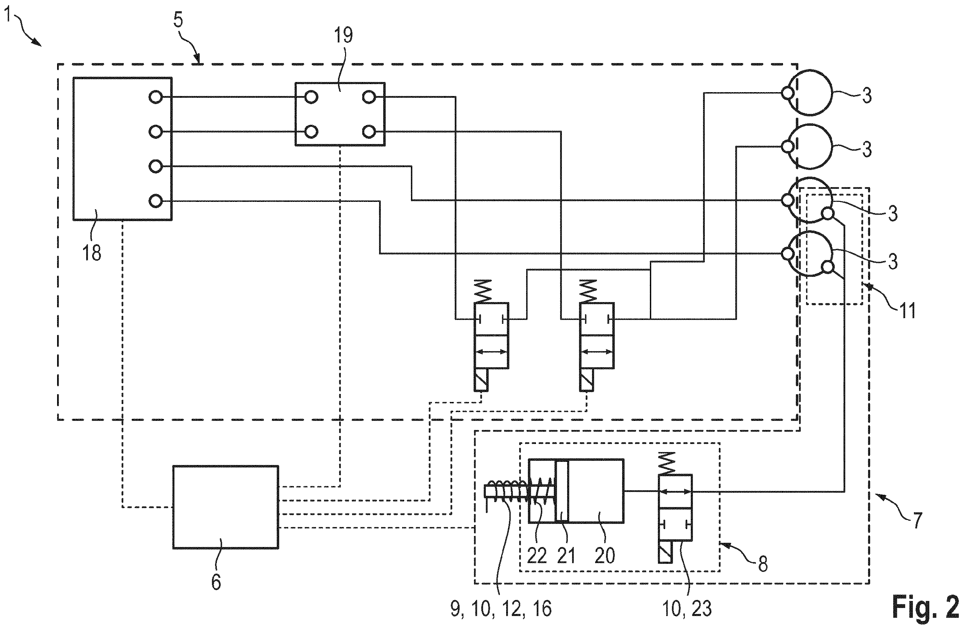

Fig. 2 zeigt die bevorzugte zweite Ausführungsform eines erfindungsgemäßen Bremssystems 1 schematisch in einer Prinzipskizze. Das Bremssystem 1 gemäß der bevorzugten zweiten Ausführungsform der Erfindung unterscheidet sich von dem Bremssystem 1 gemäß der bevorzugten ersten Ausführungsform der Erfindung in einer Ausbildung der Notbremsvorrichtung 7. Die Notbremsvorrichtung 7 ist nicht mehr mit der Aktuatorvorrichtung 5 fluidkommunizierend gekoppelt und weist dafür zum Betätigen der Bremsvorrichtung 3 eine Notaktuatorvorrichtung 11, welche über das Notventil 23 mit dem Energiespeicher 8 fluidkommunizierend gekoppelt ist. Die sonstige Funktionsweise der Notbremsvorrichtung 11 entspricht der bevorzugten ersten Ausführungsform der Erfindung.

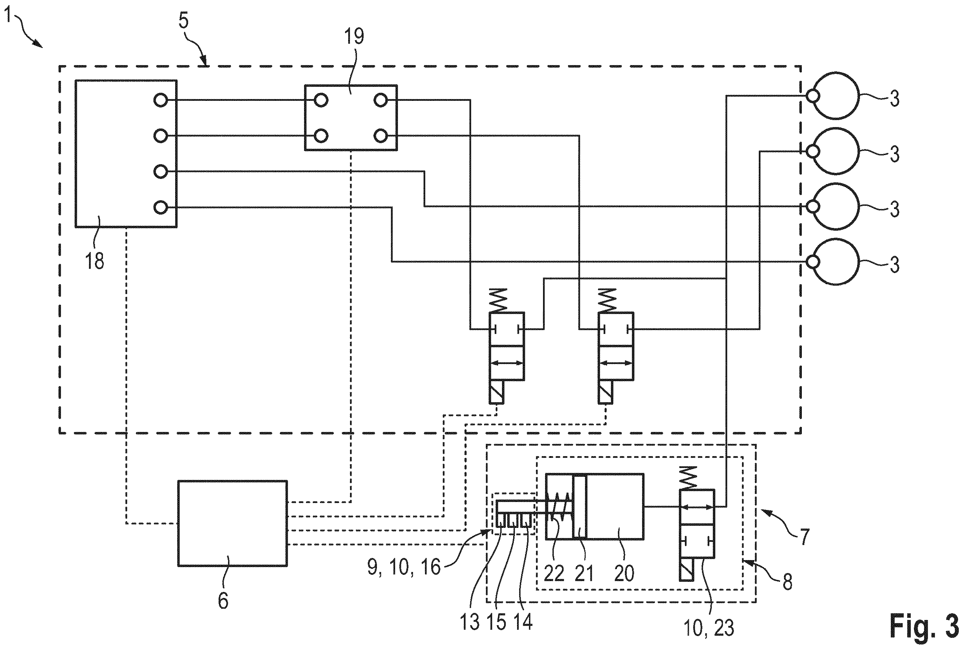

In Fig. 3 ist die bevorzugte dritte Ausführungsform eines erfindungsgemäßen Bremssystems 1 in einer Prinzipskizze schematisch abgebildet. Das Bremssystem 1 gemäß der bevorzugten dritten Ausführungsform der Erfindung unterscheidet sich von dem Bremssystem 1 gemäß der bevorzugten ersten Ausführungsform der Erfindung in einer Ausbildung der Auslösevorrichtung 9 der Notbremsvorrichtung 7. Die Auslösevorrichtung 9 ist weiterhin als Teil der Konfigurationsvorrichtung 10 ausgebildet. Anstatt eines Elektromagneten 12 weist die Auslösevorrichtung 9 nunmehr eine Spannungsüberwachungsvorrichtung 13, einen Stellmotor 14 und einen Stromspeicher 15 auf. Bei Detektieren eines Ausfalls des Bordstromnetztes durch die Spannungsüberwachungsvorrichtung 13 ist die im Stromspeicher 15 gespeicherte elektrische Energie zum Betreiben des Stellmotors 14 mittels der Spannungsüberwachungsvorrichtung 13 freigebbar. Durch Betreiben des Stellmotors 14 ist der Druckkolben 21 freigebbar. Die sonstige Funktionsweise der Notbremsvorrichtung 11 entspricht der bevorzugten ersten Ausführungsform der Erfindung.

Fig. 4 zeigt die bevorzugte Ausführungsform eines erfindungsgemäßen Verfahrens schematisch in einem Ablaufdiagramm. Gemäß einer ersten Verfahrensaktion 100 wird das Kraftfahrzeug 2 in einem normalen Fahrbetrieb betrieben. Hierbei wird die Auslösevorrichtung 9 beispielsweise mittels des Elektromagneten 12, Stellmotors 14 oder dergleichen in der Grundstellung gehalten. Die hierfür erforderliche elektrische Energie wird beispielsweise vom Bordstromnetz des Kraftfahrzeugs 2 bereitgestellt. Gemäß einer zweiten Verfahrensaktion 200 werden während der Fahrt des Kraftfahrzeugs 2 Fahrzeugparameter und Umweltparameter mittels einer Ermittlungsvorrichtung 17 (vgl. Fig. 5) des Kraftfahrzeugs 2 ermittelt, welche einen Einfluss auf eine Bremsvorgabe zum sicheren Bremsen des Kraftfahrzeugs 2 aufweisen. Hierzu zählen beispielsweise Streckendaten, Wetterdaten, Verkehrsdaten, die Fahrzeuggeschwindigkeit, Daten eines Fahrerprofils eines Fahrers des Kraftfahrzeugs 2, ein aktuelles Gesamtgewicht des Kraftfahrzeugs 2, ein Reifenzustand der Reifen des Kraftfahrzeugs 2 oder dergleichen. Das Ermitteln erfolgt vorzugsweise fortlaufend.

Gemäß einer dritten Verfahrensaktion 300 wird die durch die Notbremsvorrichtung 7 bereitstellbare Betätigung der Bremsvorrichtung 3 mittels der Konfigurationsvorrichtung 10 konfiguriert. Dies erfolgt beispielsweise durch Bewegen des Druckkolbens 21 im Druckzylinder 20, beispielsweise mittels des Elektromagneten 12, des Stellmotors 14 oder dergleichen, wodurch die Vorspannkraft der Druckfeder 22 verändert wird. Alternativ oder zusätzlich erfolgt dies beispielsweise durch Verändern einer Ventilstellung des Notventils 23. Eine vierte Verfahrensaktion 400 wird durchgeführt, wenn das Bordstromnetz eine Störung aufweist und keinen Strom oder zumindest nicht mehr ausreichend Strom zum Betreiben des Bremssystems 1 bereitstellt. Die Auslösevorrichtung 9 gibt in dieser Situation automatisch den Energiespeicher 8 frei. Dies kann beispielsweise durch Loslassen des Druckkolbens 21 erfolgen, welcher dann aufgrund der Vorspannkraft der Druckfeder 22 weiter in den Druckzylinder 20 eintaucht und somit das Hydraulikfluid verdrängt. Gemäß einer fünften Verfahrensaktion 500 wird mittels des verdrängten Hydraulikfluids die Bremsvorrichtung 3 betätigt und das Kraftfahrzeug 2 besonders situationsgerecht zum Stillstand gebracht sowie nachhaltig gebremst.

In Fig. 5 ist die eine bevorzugte Ausführungsform eines erfindungsgemäßen Kraftfahrzeugs 2 schematisch in einer Seitenansicht abgebildet. Das Kraftfahrzeug 2 weist ein Antriebssystem 25 zum Antreiben von Rädern 4 des Kraftfahrzeugs 2 auf. Ferner weist das Kraftfahrzeug 2 ein erfindungsgemäßes Bremssystem 1 zum Bremsen der Räder 4 auf. Das Bremssystem 1 weist mehrere Ermittlungsvorrichtungen 17, wie beispielsweise ein Radar, ein Lidar, einen Regensensor, ein Navigationssystem, ein Verkehrsinformationssystem oder dergleichen, zum Ermitteln von bremsrelevanten Daten auf.

### Bezugszeichenliste

- 1: Bremssystem
- 2: Kraftfahrzeug
- 3: Bremsvorrichtung
- 4: Rad
- 5: Aktuatorvorrichtung
- 6: Steuerungsvorrichtung
- 7: Notbremsvorrichtung
- 8: Energiespeicher
- 9: Auslösevorrichtung
- 10: Konfigurationsvorrichtung
- 11: Notaktuatorvorrichtung
- 12: Elektromagnet
- 13: Spannungsüberwachungsvorrichtung
- 14: Stellmotor
- 15: Stromspeicher
- 16: Rückstellvorrichtung
- 17: Ermittlungsvorrichtung
- 18: primäre Druckvorrichtung
- 19: sekundäre Druckvorrichtung
- 20: Druckzylinder
- 21: Druckkolben
- 22: Druckfeder
- 23: Notventil
- 24: Schutzventil
- 25: Antriebssystem

- 100: erste Verfahrensaktion
- 200: zweite Verfahrensaktion
- 300: dritte Verfahrensaktion
- 400: vierte Verfahrensaktion
- 500: fünfte Verfahrensaktion

## Patentansprüche

1. Bremssystem (1) für ein Kraftfahrzeug (2), aufweisend eine Bremsvorrichtung (3) zum Bremsen eines Rads (4) des Kraftfahrzeugs (2), eine Aktuatorvorrichtung (5) zum gezielten Betätigen der Bremsvorrichtung (3), eine Steuerungsvorrichtung (6) zum Steuern der Aktuatorvorrichtung (5) und eine Notbremsvorrichtung (7) zum Bremsen des Rads (4) bei einer Betriebsstörung des Kraftfahrzeugs (2),
**dadurch gekennzeichnet,**
**dass** die Notbremsvorrichtung (7) einen elektrischen Energiespeicher (8) zum Speichern von Energie zum Betätigen der Bremsvorrichtung (3) und eine Auslösevorrichtung (9) zum Freigeben der im Energiespeicher (8) gespeicherten Energie zum Betätigen der Bremsvorrichtung (3) aufweist, wobei die Auslösevorrichtung (9) ausgebildet ist, den Energiespeicher (8) bei einem Ausfall eines Bordstromnetzes des Kraftfahrzeugs (2) freizugeben.

2. Bremssystem (1) nach Anspruch 1,
**dadurch gekennzeichnet,**
**dass** die Notbremsvorrichtung (7) eine Konfigurationsvorrichtung (10) zum gezielten Konfigurieren der durch die Notbremsvorrichtung (7) bereitstellbaren Betätigung der Bremsvorrichtung (3) aufweist, wobei die Konfigurationsvorrichtung (10) zum Erhöhen sowie zum Absenken der im Energiespeicher (8) gespeicherten Energie und/oder zum Einstellen der vom Energiespeicher (8) maximal abgebbaren Energie und/oder zum Einstellen einer Abgabegeschwindigkeit der vom Energiespeicher (8) abgebbaren Energie ausgebildet ist.

3. Bremssystem (1) nach Anspruch 2,
**dadurch gekennzeichnet,**
**dass** die Konfigurationsvorrichtung (10) ausgebildet ist, das Konfigurieren der bereitstellbaren Betätigung in Abhängigkeit von Streckendaten und/oder Wetterdaten und/oder Verkehrsdaten und/oder der Fahrzeuggeschwindigkeit und/oder eines Fahrerprofils eines Fahrers des Kraftfahrzeugs (2) und/oder eines Gesamtgewichts des Kraftfahrzeugs (2) und/oder eines Reifenzustands des Kraftfahrzeugs (2) durchzuführen.

4. Bremssystem (1) nach Anspruch 2 oder 3,
**dadurch gekennzeichnet,**
**dass** die Konfigurationsvorrichtung (10) zum Konfigurieren des Energiespeichers (8) einen selbsthemmenden Spindeltrieb aufweist.

5. Bremssystem (1) nach einem der vorangegangenen Ansprüche,
**dadurch gekennzeichnet,**
**dass** der Energiespeicher (8) zum direkten Betätigen der Bremsvorrichtung (3) und/oder zum Betätigen der Aktuatorvorrichtung (5) zum Betätigen der Bremsvorrichtung (3) und/oder zum Betätigen einer Notaktuatorvorrichtung (11) zum Betätigen der Bremsvorrichtung (3) ausgebildet ist.

6. Bremssystem (1) nach einem der vorangegangenen Ansprüche,
**dadurch gekennzeichnet,**
**dass** die Auslösevorrichtung (9) einen Elektromagneten (12) zum Halten der Auslösevorrichtung (9) in einer Grundstellung aufweist.

7. Bremssystem (1) nach einem der vorangegangenen Ansprüche,
**dadurch gekennzeichnet,**
**dass** die Auslösevorrichtung (9) eine Spannungsüberwachungsvorrichtung (13) zum Überwachen des Bordstromnetzes, einen elektrischen Stellmotor (14) zum Freigeben des Energiespeichers (8) zum Betätigen der Bremsvorrichtung (3) und einen Stromspeicher (15) zum Speichern eines Notbetriebsstroms zum Betreiben des Stellmotors (14) aufweist, wobei die Auslösevorrichtung (9) ausgebildet ist, bei einem Ausfall des Bordstromnetzes den Stellmotor (14) mit dem Notbetriebsstrom zu betreiben.

8. Bremssystem (1) nach einem der vorangegangenen Ansprüche,
**dadurch gekennzeichnet,**
**dass** die Notbremsvorrichtung (7) eine Rückstellvorrichtung (16) zum Zurückstellen der Auslösevorrichtung (9) in eine Grundstellung aufweist.

9. Verfahren zum Betreiben eines Bremssystems (1) nach einem der Ansprüche 2-4 und einem der Ansprüche 5-8, wenn abhängig von Anspruch 2, aufweisend:
- Halten der Auslösevorrichtung (9) in der Grundstellung, wenn ein Bordstromnetz zum Betätigen der Aktuatorvorrichtung (5) ausreichend elektrischen Strom bereitstellt,
- Ermitteln von Fahrzeugparametern und Umweltparametern, die einen Einfluss auf eine Bremsvorgabe zum Sicheren Bremsen des Kraftfahrzeugs (2) haben, mittels einer Ermittlungsvorrichtung (17) des Kraftfahrzeugs (2),
- Konfigurieren der durch die Notbremsvorrichtung (7) bereitstellbaren Betätigung der Bremsvorrichtung (3) mittels der Konfigurationsvorrichtung (10),
- Freigeben der im elektrischen Energiespeicher (8) gespeicherten Energie mittels der Auslösevorrichtung (9), wenn das Bordstromnetz zum Betätigen der Aktuatorvorrichtung (5) nicht mehr ausreichend elektrischen Strom bereitstellt und
- Betätigen der Bremsvorrichtung (3) mittels der vom elektrischen Energiespeicher (8) freigegebenen Energie.

10. Kraftfahrzeug (2), aufweisend ein Antriebssystem (25) zum Antreiben des Kraftfahrzeugs (2) und ein Bremssystem (1) zum Bremsen des Kraftfahrzeugs (2),
**dadurch gekennzeichnet,**
**dass** das Bremssystem (1) als Bremssystem (1) nach einem der Ansprüche 1 bis 8 ausgebildet ist.

## Claims

1. Brake system (1) for a motor vehicle (2), comprising a brake device (3) for braking a wheel (4) of the motor vehicle (2), an actuator device (5) for actuating the brake device (3) in a targeted manner, a control device (6) for controlling the actuator device (5), and an emergency brake device (7) for braking the wheel (4) in the event of a malfunction of the motor vehicle (2), **characterized in that** the emergency brake device (7) has an electrical energy store (8) for storing energy for actuating the brake device (3) and has a triggering device (9) for releasing the energy stored in the energy store (8) for the purposes of actuating the brake device (3), the triggering device (9) being designed to release the energy store (8) in the event of a failure of an on-board electrical system of the motor vehicle (2).

2. Brake system (1) according to Claim 1,
**characterized**
**in that** the emergency brake device (7) has a configuration device (10) for configuring in a targeted manner the actuation, providable using the emergency brake device (7), of the brake device (3), the configuration device (10) being designed for increasing and for reducing the energy stored in the energy store (8) and/or for setting the maximum energy that can be output from the energy store (8) and/or for setting a rate of output of the energy that can be output from the energy store (8).

3. Brake system (1) according to Claim 2,
**characterized**
**in that** the configuration device (10) is designed to perform the configuration of the providable actuation in a manner dependent on route data and/or weather data and/or traffic data and/or the vehicle speed and/or a driver profile of a driver of the motor vehicle (2) and/or a total weight of the vehicle (2) and/or a tyre state of the motor vehicle (2).

4. Brake system (1) according to Claim 2 or 3,
**characterized**
**in that** the configuration device (10) has a self-locking spindle mechanism for the purposes of configuring the energy store (8).

5. Brake system (1) according to one of the preceding claims,
**characterized**
**in that** the energy store (8) is designed to directly actuate the brake device (3) and/or to actuate the actuator device (5) for the purposes of actuating the brake device (3) and/or to actuate an emergency actuator device (11) for the purposes of actuating the brake device (3).

6. Brake system (1) according to one of the preceding claims,
**characterized**
**in that** the triggering device (9) has an electromagnet (12) for holding the triggering device (9) in a basic position.

7. Brake system (1) according to one of the preceding claims,
**characterized**
**in that** the triggering device (9) has a voltage monitoring device (13) for monitoring the on-board electrical system, an electric actuating motor (14) for releasing the energy store (8) for the purposes of actuating the brake device (3), and an electrical storage battery (15) for storing an emergency operating current for operating the actuating motor (14), the triggering device (9) being designed to operate the actuating motor (14) with the emergency operating current in the event of a failure of the on-board electrical system.

8. Brake system (1) according to one of the preceding claims,
**characterized**
**in that** the emergency brake device (7) has a restoring device (16) for restoring the triggering device (9) to a basic position.

9. Method for operating a brake system (1) according to one of Claims 2-4 and one of Claims 5-8 if dependent on Claim 2, comprising:
- holding the triggering device (9) in the basic position if an on-board electrical system is providing sufficient electric current to actuate the actuator device (5),
- using a determining device (17) of the motor vehicle (2) to determine vehicle parameters and environmental parameters that have an influence on a braking input for reliably braking the motor vehicle (2),
- using the configuration device (10) to configure the actuation, providable using the emergency brake device (7), of the brake device (3),
- using the triggering device (9) to release the energy stored in the electrical energy store (8) if the on-board electrical system is no longer providing sufficient electric current to actuate the actuator device (5), and
- using the energy released from the electrical energy store (8) to actuate the brake device (3).

10. Motor vehicle (2) comprising a drive system (25) for driving the motor vehicle (2) and comprising a brake system (1) for braking the motor vehicle (2),
**characterized**
**in that** the brake system (1) is designed as a brake system (1) according to one of Claims 1 to 8.

## Revendications

1. Système de freinage (1) destiné à un véhicule automobile (2), ledit système de freinage comportant un dispositif de freinage (3) destiné à freiner une roue (4) du véhicule automobile (2), un dispositif d'actionnement (5) destiné à actionner de manière ciblée le dispositif de freinage (3), un dispositif de commande (6) destiné à commander le dispositif d'actionnement (5) et un dispositif de freinage d'urgence (7) destiné à freiner la roue (4) en cas de dysfonctionnement du véhicule automobile (2),
**caractérisé en ce que**
le dispositif de freinage d'urgence (7) comporte un accumulateur d'énergie électrique (8) destiné à stocker l'énergie d'actionnement du dispositif de freinage (3) et un dispositif de déclenchement (9) destiné à libérer l'énergie emmagasinée dans l'accumulateur d'énergie (8) et prévue pour l'actionnement du dispositif de freinage (3), le dispositif de déclenchement (9) étant conçu pour libérer l'accumulateur d'énergie (8) en cas de panne d'un réseau électrique de bord du véhicule automobile (2).

2. Système de freinage (1) selon la revendication 1,
**caractérisé en ce que**
le dispositif de freinage d'urgence (7) comporte un dispositif de configuration (10) destiné à configurer de manière ciblée l'actionnement du dispositif de freinage (3) qui peut être assuré par le dispositif de freinage d'urgence (7), le dispositif de configuration (10) étant conçu pour augmenter et diminuer l'énergie emmagasinée dans l'accumulateur d'énergie (8) et/ou pour régler l'énergie maximale pouvant être libérée par l'accumulateur d'énergie (8) et/ou pour définir une vitesse de distribution de l'énergie pouvant être libérée par l'accumulateur d'énergie (8).

3. Système de freinage (1) selon la revendication 2,
**caractérisé en ce que**
le dispositif de configuration (10) est conçu pour configurer l'actionnement pouvant être fourni en fonction de données d'itinéraire et/ou de données météorologiques et/ou de données de trafic et/ou de la vitesse du véhicule et/ou d'un profil d'un conducteur du véhicule automobile (2) et/ou d'un poids total du véhicule automobile (2) et/ou d'un état des pneumatiques du véhicule automobile (2).

4. Système de freinage (1) selon la revendication 2 ou 3,
**caractérisé en ce que**
le dispositif de configuration (10) destiné à configurer l'accumulateur d'énergie (8) comporte un entraînement à broche autobloquant.

5. Système de freinage (1) selon l'une des revendications précédentes,
**caractérisé en ce que**
l'accumulateur d'énergie (8) est conçu pour actionner directement le dispositif de freinage (3) et/ou pour actionner le dispositif d'actionnement (5) destiné à actionner le dispositif de freinage (3) et/ou pour actionner un dispositif d'actionnement de secours (11) destiné à actionner le dispositif de freinage (3).

6. Système de freinage (1) selon l'une des revendications précédentes,
**caractérisé en ce que**
le dispositif de déclenchement (9) comporte un électroaimant (12) destiné à maintenir le dispositif de déclenchement (9) dans une position de base.

7. Système de freinage (1) selon l'une des revendications précédentes,
**caractérisé en ce que**
le dispositif de déclenchement (9) comporte un dispositif de surveillance de tension (13) destiné à surveiller le réseau électrique de bord, un servomoteur électrique (14) destiné à libérer l'accumulateur d'énergie (8) afin d'actionner le dispositif de freinage (3) et un accumulateur d'énergie (15) destiné à stocker un courant de fonctionnement d'urgence destiné à faire fonctionner le servomoteur (14), le dispositif de déclenchement (9) étant conçu pour faire fonctionner le servomoteur (14) avec le courant de fonctionnement de secours en cas de panne du réseau électrique de bord.

8. Système de freinage (1) selon l'une des revendications précédentes,
**caractérisé en ce que**
le dispositif de freinage d'urgence (7) comporte un dispositif de réinitialisation (16) destiné à réinitialiser le dispositif de déclenchement (9) dans une position de base.

9. Procédé de fonctionnement d'un système de freinage (1) selon l'une des revendications 2 à 4 et l'une des revendications 5 à 8, si elle dépend de la revendication 2, ledit procédé comprenant les étapes suivantes :
- maintenir le dispositif de déclenchement (9) dans la position de base lorsqu'un réseau électrique de bord fournit un courant électrique suffisant pour faire fonctionner le dispositif d'actionnement (5),
- déterminer des paramètres du véhicule et des paramètres d'environnement qui ont une influence sur une spécification de freinage pour un freinage sûr du véhicule automobile (2) au moyen d'un dispositif de détermination (17) du véhicule automobile (2),
- configurer l'actionnement du dispositif de freinage (3), pouvant être assuré par le dispositif de freinage d'urgence (7), au moyen du dispositif de configuration (10),
- libérer l'énergie, emmagasinée dans l'accumulateur d'énergie électrique (8), au moyen du dispositif de déclenchement (9) si le réseau électrique de bord fournit un courant électrique qui n'est plus suffisant pour actionner le dispositif d'actionnement (5) et
- actionner le dispositif de freinage (3) au moyen de l'énergie libérée par l'accumulateur d'énergie électrique (8).

10. Véhicule automobile (2), comportant un système d'entraînement (25) destiné à l'entraînement du véhicule automobile (2) et un système de freinage (1) destiné à freiner le véhicule automobile (2),
**caractérisé en ce que**
le système de freinage (1) est conçu comme un système de freinage (1) selon l'une des revendications 1 à 8.
